Europäisches Patentamt

European Patent Office

Office européen des brevets

(11) Publication number: **0 166 573**
**B1**

# EUROPEAN PATENT SPECIFICATION

(45) Date of publication of patent specification: **21.09.88**

(51) Int. Cl.⁴: **B 64 C 11/14**

(21) Application number: **85304385.9**

(22) Date of filing: **19.06.85**

(54) Aircraft propeller with improved spinner assembly.

(30) Priority: **25.06.84 US 624266**

(43) Date of publication of application:
**02.01.86 Bulletin 86/01**

(45) Publication of the grant of the patent:
**21.09.88 Bulletin 88/38**

(84) Designated Contracting States:
**DE FR GB IT NL**

(56) References cited:
**GB-A-2 041 829**
**GB-A-2 127 495**
**US-A-2 742 096**
**US-A-2 745 501**
**US-A-2 793 702**
**US-A-3 115 937**
**US-A-4 419 053**

(73) Proprietor: **HARTZELL PROPELLER INC.**
**1800 Covington Avenue**
**Piqua Ohio 45356-2634 (US)**

(72) Inventor: **Harlamert, W. Benjamin**
**350 Washington Avenue**
**Piqua Ohio 45356 (US)**
Inventor: **Stackhouse, Donald C.**
**350 Washington Avenue**
**Piqua Ohio 45356 (US)**

(74) Representative: **Allden, Thomas Stanley et al**
**A.A. THORNTON & CO. Northumberland House**
**303-306 High Holborn**
**London WC1V 7LE (GB)**

Courier Press, Leamington Spa, England.

## Description

This invention relates to an aircraft propeller assembly

In US—A—3 115 937 there is generally disclosed an aircraft propeller assembly comprising a propeller hub adapted to be driven by an engine, a plurality of angularly disposed adjustable pitch propeller blades supported by the propeller hub, pitch changing means for changing the pitch of the propeller blades, and a spinner assembly enclosing the propeller hub and the pitch changing means, the spinner assembly including a generally circular and radially disposed bulkhead member connected to the propeller hub and also including a dome member mounted on the bulkhead member and covering the propeller hub.

In accordance with the present invention as claimed the aforesaid generally disclosed aircraft propeller assembly is characterised in that an electrically operated de-icing element is mounted on each of the propeller blades, means are supported by the propeller hub for supplying electrical power to the de-icing elements while the propeller hub and blades are rotating, and the bulkhead member comprises a core of spacer material disposed between spaced skins of plastics material, the means for supplying electrical power comprising at least one electrical conducting slip ring and electrical conducting means extending through the skins and the core and connected to the slip ring, the slip ring being supported by a body of electrical insulating material on one of the skins, a layer of resin impregnated fibrous material bonded to the body and said one skin positively attaching the body to said one skin.

A preferred aircraft propeller assembly constructed in accordance with the present invention includes a substantially flat bulkhead member having a honeycomb core between resin impregnated high modulus fibre skins. The outer peripheral edge portions of the skins are joined together and form a flange which supports a spinner dome also moulded of resin impregnated high modulus fibres. An annular portion of the bulkhead has a core of high density rigid foam material, and an insulator ring is permanently bonded to or moulded into the rearward skin of the bulkhead for supporting concentric copper slip rings for a de-icing system. Terminal posts extend from the slip rings through the bulkhead and receive wire conductors which extend to heating elements mounted on the propeller blades. The spinner assembly also incorporates a spinner fairing adjacent the base of each propeller blade to provide for a smooth flow of air around each blade with minimum drag. Each spinner fairing includes a rigid foam core covered by a plastics resin skin which may be fibre reinforced. The skin is bonded to the spinner dome and then sanded and painted with the dome.

The aforesaid preferred aircraft propeller assembly is advantageous in that it incorporates a simplified spinner assembly whose weight is substantially reduced without reduction in its strength. The spinner assembly is also adapted to incorporate a slip ring assembly also of simplified construction and reduced weight and which is bonded directly to a spinner bulkhead member of composite plastics materials.

In order that the invention may be well understood the preferred embodiment thereof, given by way of example, will now be described with reference to the accompanying drawing, in which:

Fig. 1 is a perspective view of a preferred four blade aircraft propeller assembly constructed in accordance with the invention;

Fig. 2 is an elevational view of the propeller hub and a portion of a propeller blade and showing the spinner assembly in axial cross section;

Fig. 3 is an enlarged fragmentary section of the spinner assembly shown in Fig. 2; and

Figs. 4—6 are fragmentary views of the blade and spinner assembly shown in Fig. 2 and illustrating a fairing attached to the spinner dome at the base of each propeller blade.

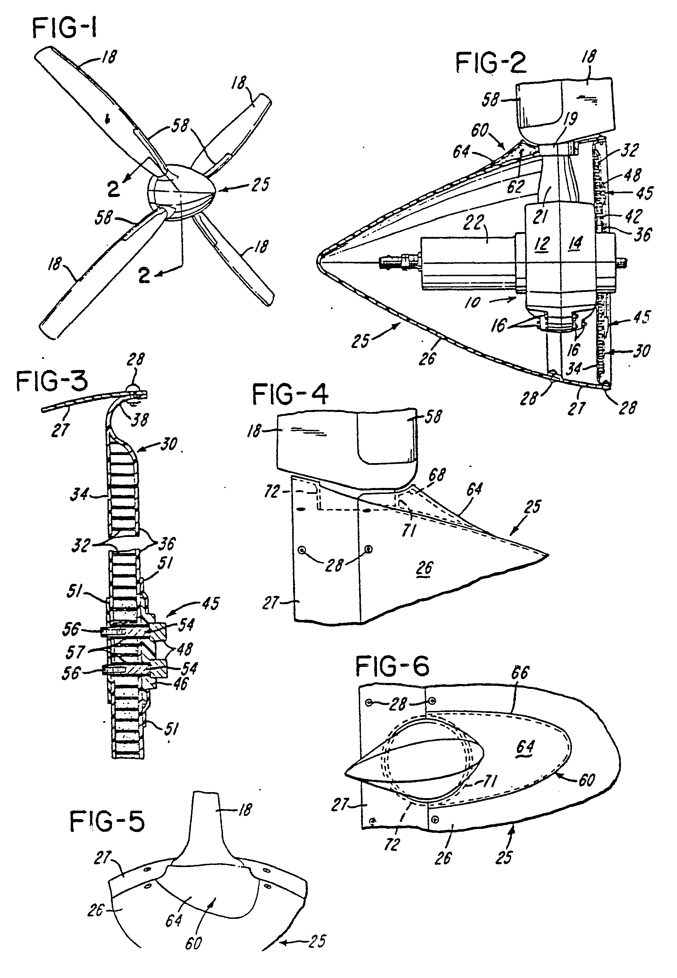

The aircraft propeller assembly shown in Figs. 1 and 2 includes a propeller hub 10 formed by a forward hub section 12 and a rearward hub section 14 which are clamped together by a series of peripherally spaced bolts 16. A plurality of angularly arranged propeller blades 18 project radially outwardly from the hub 10, and each blade includes a cylindrical base portion 19 and a support portion or shank 21 which is retained by one or more anti-friction bearings (now shown) confined within the mating hub sections 12 and 14. The propeller hub 10 also supports a hydraulically actuated blade pitch changing mechanism including a cylinder assembly 22 for simultaneously changing the pitch of the blades 18 between a feather position and a reverse position through high and low pitch positions. The detail construction of the propeller hub and the pitch changing mechanism is disclosed in US—A—4 097 189 which is incorporated by reference. The detail construction of each blade 18 is disclosed in US—A—4 407 635 which is also incorporated by reference.

The propeller hub 10 and the portions 19 and 21 of each propeller blade 18 and the blade pitch changing cylinder assembly 22 are enclosed within a spinner assembly 25 which includes a forward spinner dome section 26 and a rearward dome section 27 coupled together by threaded fasteners 28. Preferably, the spinner dome sections 26 and 27 are formed of high modulus fibres arranged in a mat which is impregnated with an epoxy resin. These materials are all pressurized within a heated mould to provide a high strength shell which has a weight approximately 60% lower than the weight of an aluminum spinner dome such as would be used in the above-mentioned US—A—3 115 937.

The rearward peripheral edge portion of the spinner dome section 27 is attached by another set of peripherally spaced fasteners or screws 28 (Fig. 3) to an annular substantially flat radially disposed spinner bulkhead 30. As shown in Figs. 2 and 3, the bulkhead 30 has a centre hole for receiving the hub section 14 and is secured to the hub section by bolts (not shown). The bulkhead 30 includes a honeycomb core 32 formed by a fibrous-paper material sold by DuPont under the trademark Nomex. The honeycomb core may be made of aluminum or other materials. The core 32 is sandwiched between a forward substantially flat skin 34 and a rearward substantially flat skin 36 of high modulus fibre material, such as carbon, aramid or glass fibers, impregnated with epoxy resin in the same manner as the spinner dome sections 26 and 27. The outer peripheral edge portions of the skins 34 and 36 are joined and moulded together and form a peripheral flange 38 which receives the fasteners 28 for supporting the rearward spinner dome section 27.

An inner annular portion of the spinner bulkhead 30 incorporates a core portion 42 (Fig. 3) formed of a high density rigid polyurethane foam material. A slip ring assembly 45 (Fig. 3) is secured to or incorporated in the bulkhead 30 in the area of the rigid foam core 42 and includes an annular block or ring 46 of electrical insulating plastics material. The ring 46 supports a set of concentric copper slip rings 48 which are placed as inserts within the ring 46 when it is moulded. The slip rings 48 are adapted to receive corresponding carbon brushes (not shown), and the insulating ring 46 is bonded to the rearward skin 36 of the bulkhead 30 by epoxy adhesive or resin and a layer 51 of resin impregnated fiber glass material overlaying the insulating ring and the rearward skin 36 and bonded thereto to positively attach the insulating body to the rearward skin. The insulating ring 46 may also be formed during the same layup and curing operations as the bulkhead 30.

A set of copper terminal posts 54 are welded to the slip rings 48 and project forwardly through corresponding holes within the spinner bulkhead 30 in the area of the rigid foam core 42. The forward end portions of the terminal posts 54 have threaded holes 56 for receiving terminal screws (not shown), and the posts 54 are bonded within the bulkhead 30 by adhesive 57. Another layer 51 is bonded to the forward skin in the area of the projecting end portions of the terminal posts. The terminal screws connect the inner end of flexible electrical conducting wires (not shown) to the terminal posts 54. The outer ends of the wires are connected to de-icing heating elements 58 which are bonded to the leading edges of the propeller blades 18. One source for the de-icing heating elements 58 is The B. F. Goodrich Company which markets the heating elements under the trademark HOT-PROP.

The spinner assembly 25 also includes a spinner fairing 60 for each of the propeller blades 18 to provide for smooth aerodynamic flow of air around the inner portion of each propeller blade. Each of the fairings 60 includes a core 62 of rigid polyurethane foam and is shaped to fit or mount on the curved outer surface of the spinner dome section 26. The foam core 62 is covered or enclosed by a vacuum formed plastics resin skin 64 bonded thereto and which may be fibre reinforced and is contoured to the desired curvature according to the shape of the inner portion of the propeller blade 18 to provide the smoothest air flow. Each spinner fairing 60 is bonded to the forward spinner dome section 26 by epoxy cement, and the outer edge portion 66 of the skin 64 is sanded and painted with the same paint as applied to the spinner dome so that the fairings 60 appear to be integral portions of the spinner dome section 26 and are removable therewith from the rearward dome section 27.

The skin 64 of each fairing 60 also has a curved surface 68 which is a concave surface of revolution corresponding to the path of the adjacent inner end surface of the propeller blade 18 when the pitch of the blade is changed by rotation of the blade on its radial axis. As shown in Figs. 4 and 6, the forward and rearward sections of the spinner dome have mating semi-cylindrical portions 71 and 72, respectively, which define a cylindrical opening for receiving the base portion 19 of each propeller blade 18. The mating semi-cylindrical portions 71 and 72 closely surround the cylindrical base portion 19 of each propeller blade 18 and cooperate with the curved outer surface of the corresponding spinner fairing 60 to provide for a smooth non-turbulent flow of air around the inner portion of each propeller blade and thereby minimize the drag forces on the spinner assembly 25.

As mentioned above, the basic flat construction of the spinner bulkhead 30 provides for simplified construction of the bulkhead with the resin impregnated skins 34 and 36 separated by the cores 32 and 42. The basic flat construction of the bulkhead 30 also simplifies the construction and incorporation of the de-icing slip ring assembly 45 in order to minimize the weight of the bulkhead 30 and slip ring assembly 45 without any decrease in the strength of the bulkhead 30. The assembly of the terminal posts 54 through the bulkhead 30 also simplifies the installation of the slip ring assembly as well as simplifying the connection of the wire conductors extending from the de-icing heating elements 58 to the terminal posts 54. It is also apparent that the construction of the spinner bulkhead 30 and slip ring assembly 45 minimizes the machining of the components and provides for relatively quick assembly of the components.

**Claims**

1. An aircraft propeller assembly comprising a propeller hub (10) adapted to be driven by an engine, a plurality of angularly disposed adjustable pitch propeller blades (18) supported by the propeller hub, pitch changing means (22) for changing the pitch of the propeller blades, and a spinner assembly (25) enclosing the propeller hub and the pitch changing means, the spinner assembly including a generally circular and radially disposed bulkhead member (30) connected to the propeller hub and also including a dome member (26, 27) mounted on the bulkhead member and covering the propeller hub, characterised in that an electrically operated de-icing element (58) is mounted on each of the propeller blades, means (48, 54) are supported by the propeller hub for supplying electrical power to the de-icing elements while the propeller hub and blades are rotating, and the bulkhead member comprises a core (32) of spacer material disposed between spaced skins (34, 36) of plastics material, the means for supplying electrical power comprising at least one electrical conducting slip ring (48) and electrical conducting means (54) extending through the skins and the core and connected to the slip ring, the slip ring being supported by a body (46) of electrical insulating material on one (36) of the skins, a layer (51) of resin impregnated fibrous material bonded to the body and said one skin positively attaching the body to said one skin.

2. An aircraft propeller assembly as claimed in claim 1, wherein the spaced skins (34, 36) are first (36) and second (34) substantially flat skins of fibre reinforced resin material, the skins having corresponding outer peripheral edge portions connected to each other and to the dome member (26, 27) a set of the electrical conducting slip rings (48) is provided with the slip rings disposed in concentric relation, a layer of adhesive bonds the body (46) of electrical insulating material to the first skin, and the electrical conducting means (54) comprises a corresponding set of electrical conducting terminal posts (54) connected to the corresponding slip rings within the body of electrical insulating material.

3. An aircraft propeller assembly as claimed in claim 2, wherein the core (32, 42) has an inner annular portion (42) having a higher density than the density of a surrounding portion (32) of the core, and the terminal posts (54) extend through the inner annular portion of the core.

4. An aircraft propeller assembly as claimed in claim 2 or claim 3, wherein each terminal post (54) has a threaded end portion (56) for receiving a fastener to attach a wire conductor extending from one of the de-icing elements (58).

5. An aircraft propeller assembly as claimed in any of claims 2 to 4, wherein a second layer (51) of resin impregnated fibrous material is bonded to the second skin (34) in the area of the terminal posts (54).

6. An aircraft propeller assembly as claimed in any of the preceding claims, wherein the dome member (26, 27) comprises an annular rearward dome section (27) and a separate generally conical forward dome section (26) each formed of a fibre reinforced resin material, the forward and rearward dome sections cooperating to define openings for the propeller blades (18), means (28) are provided for releasably connecting the forward dome section to the rearward dome section, and a spinner fairing (60) is mounted on the forward dome section adjacent each of the propeller blades, each of the spinner fairings including a skin (64) of fibre reinforced resin material bonded to the outer surface of the forward dome section, and the spinner fairings being removable with the forward dome section from the rearward dome section.

7. An aircraft propeller assembly as claimed in claim 6, wherein the skin (64) of each spinner fairing (60) forms substantially a concave surface of revolution conforming generally to the base surface of the corresponding propeller blade (18).

8. An aircraft propeller assembly as claimed in claim 6, or claim 7, wherein the skin (64) of each spinner fairing (60) is bonded to a core (62) of rigid plastics foam material shaped complementarily to the curved outer surface of the forward dome section (26).

9. An aircraft propeller assembly as claimed in any of the preceding claims, wherein the core (32, 42) comprises a honeycomb material.

**Patentansprüche**

1. Luftfahrzeugpropellervorrichtung mit einer Propellernabe (10), die von einem Triebwerk angetrieben werden kann, mit einer Mehrzahl von winklig angeordneten Propellerblättern (18) mit einstellbarer Steigung, die in der Propellernabe gelagert sind, mit Steigungsänderungsmitteln (22) zur Änderung der Steigung der Propellerblätter, und mit einer Propellerhaubenvorrichtung (25), die die Propellernabe und die Steigungsänderungsmittel umschließt, wobei diese Propellerhaubenvorrichtung einen im allgemeinen kreisrunden und radial angeordneten Trennwandteil (30) enthält, der mit der Propellernabe verbunden ist und des weiteren einen Haubenteil (26, 27) enthält, der an dem Trennwandteil befestigt ist und die Propellernabe abdeckt, dadurch gekennzeichnet, daß ein elektrisch betriebenes Enteisungselement (58) an jedem Propellerblatt (18) befestigt ist, Mittel (48, 54) in der Propellernabe gehaltert sind und zur Stromversorgung der Enteisungselemente dienen, während die Propellernabe und -blätter sich drehen, und der Trennwandteil einen Kern (32) aus Abstandshaltermaterial aufweist, der zwischen voneinander beabstandeten Außenschichten (34, 36) aus Kunststoffmaterial angeordnet ist, wobei die Mittel zur Stromversorgung mindestens einen elektrisch leitenden Schleifring (48) und elektrisch leitende Mittel (54) enthalten, die sich durch die Außenschichten und den Kern erstrecken und mit dem Schleifring verbunden sind, wobei des weiteren der Schleifring in einem Körper (46) aus Elektroisoliermaterial auf einer (36) der Außenschichten gelagert ist, eine Schicht (51) aus harzgetränktem Fasermaterial mit dem Körper und dieser einen Außenschicht verklebt ist und so den Körper mit dieser einen Außenschicht starr verbindet.

2. Luftfahrzeugpropellervorrichtung nach Anspruch 1, worin die voneinander beabstandeten Außenschichten (34, 36) eine erste (36) und eine zweite (34) im wesentlichen flache Außenschicht aus faserverstärktem Kunststoffmaterial sind, wobei die Außenschichten einander entsprechende äußere Randkantenteile aufweisen, die miteinander und mit dem Haubenteil (26, 27) verbunden sind, worin des weiteren eine Gruppe elektrisch leitender Schleifringe (48) mit konzentrisch angeordneten Schleifringen versehen ist, worin ferner eine Klebstoffschicht den Körper (46) aus Elektroisoliermaterial mit der ersten Außenschicht verklebt, und worin die elektrisch leitenden Mittel (54) eine entsprechende Gruppe elektrisch leitender Anschlußstücke (54) enthält, die innerhalb des Körpers aus Elektroisoliermaterial mit den entsprechenden Schleifringen verbunden sind

3. Luftfahrzeugpropellervorrichtung nach Anspruch 2, worin der Kern (32, 42) einen inneren ringförmigen Teil (42) aufweist, dessen Dichte größer ist als diejenige eines ihn umgebenden Teiles (32) des Kerns, und worin die Anschlußstücke (54) sich durch den inneren ringförmigen Teil des Kernes erstrecken.

4. Luftfahrzeugpropellervorrichtung nach Anspruch 2 oder 3, worin jedes Anschlußstück (54) einen mit einem Gewinde versehenen Endteil (56) aufweist zur Aufnahme eines Befestigungsstücks, um ein Stromkabel, das von einem Enteisungselement (58) hergeführt ist, anzuschließen.

5. Luftfahrzeugpropellervorrichtung nach einem der Ansprüche 2 bis 4, worin eine zweite Schicht (51) aus harzgetränktem Fasermaterial mit der zweiten Außenschicht (34) im Bereich der Anschlußstücke (54) in Verbund gebracht ist.

6. Luftfahrzeugpropellervorrichtung nach einem der vorstehenden Ansprüche, worin der Haubenteil (26, 27) einen ringförmigen rückwärtigen Haubenbereich (27) und einen separaten im allgemeinen konusförmigen vorderen Haubenbereich (26) enthält und jeder aus einem faserverstärkten Kunststoffmaterial hergestellt ist, worin des weiteren der vordere und der rückwärtige Haubenbereich derart miteinander zusammenwirken, daß sie Öffnungen für die Propellerblätter (18) bilden, worin ferner Mittel (28) vorhanden sind zum lösbaren Verbinden des vorderen Haubenbereichs und des rückwärtigen Haubenbereichs, und worin eine Propellerhaubenverkleidung (60) am vorderen Haubenbereich jeweils angrenzend an einem Propellerblatt befestigt ist, wobei jede dieser Propellerhaubenverkleidungen eine Außenschicht (64) aus faserverstärktem Kunststoffmaterial enthält, die mit der äußeren Oberfläche des vorderen Haubenbereichs verklebt ist, und worin die Propellerhaubenverkleidungen mit dem vorderen Haubenbereich von dem rückwärtigen Haubenbereich abnehmbar sind.

7. Luftfahrzeugpropellervorrichtung nach Anspruch 6, worin die Außenschicht (64) jeder Propellerhaubenverkleidung (60) eine im wesentlichen konkave Rotationsoberfläche bildet, die sich im wesentlichen der Sockeloberfläche des entsprechenden Propellerblattes (18) anpaßt.

8. Luftfahrzeugpropellervorrichtung nach Anspruch 6 oder 7, worin die Außenschicht (64) jeder Propellerhaubenverkleidung (60) mit einem Kern (62) aus starrem Kunststoffschaummaterial, das komplementär zur gekrümmten äußeren Oberfläche des vorderen Haubenbereichs (26) geformt ist, verklebt ist.

9. Luftfahrzeugpropellervorrichtung nach einem der vorstehenden Ansprüche, worin der Kern (32, 42) ein bienenwabenförmig ausgebildetes Material enthält.

**Revendications**

1. Ensemble d'hélice d'avion comprenant un moyeu d'hélice (10) conçu pour être entraîné par un moteur, plusieurs pales (18) d'hélice de pas réglable disposées angulairement, supportées par le moyeu d'hélice, des moyens (22) de changement de pas destinés à changer le pas des pales d'hélice, et un ensemble à cône (25) renformant le moyeu d'hélice et les moyens de changement de pas, l'ensemble à cône comprenant un élément de cloison (30) globalement circulaire et disposé radialement, relié au moyeu d'hélice et comprenant aussi un élément de dôme (26, 27), monté sur l'hélice de cloison et recouvrant le moyeu d'hélice, caractérisé en ce qu'un élément de dégivrage électrique (58) est monté sur chacune des pales d'hélice, des moyens (48, 54) sont supportés par le moyeu d'hélice pour alimenter en énergie électrique les éléments de dégivrage pendant que le moyeu et les pales de l'hélice sont en rotation, et l'élément de cloison comprend une âme (32) en matière d'espacement disposée entre des membranes espacées (34, 36) en matière plastique, les moyens d'alimentation en énergie électrique comprenant au moins une bague collectrice (48) conductrice lu courant électrique et des moyens (54) de conduction du courant électrique passant à travers les membranes et l'âme et connectés à la bague collectrice, la bague collectrice étant supportée par un corps (46) en matière électriquement isolante sur une première (36) des membranes, une couche (51) de matière fibreuse, imprégnée de résine, liée au corps et à ladite première membrane, fixant fermement le corps à ladite première membrane, fixant fermement le corps à ladite première membrane.

2. Ensemble d'hélice d'avion selon la revendication 1, dans lequel les membranes espacées (34, 36) sont des première (36) et seconde (34) membranes sensiblement plates en résine armée de fibres, les membranes ayant des parties marginales périphériques extérieures correspondantes reliées entre elles et à l'élément de dôme (26, 27), un jeu de bagues collectrices (48), conductrices du courant électrique, est prévu, les bagues collectrices étant disposées concentriquement, une couche d'adhésif lie le corps (46) en matière électriquement isolante à la première membrane, et les moyens (54) conducteurs du courant électrique comprennent un jeu correspondant de broches (54) de bornes conductrices du courant électrique connectées aux bagues collectrices correspondantes à l'intérieur du corps en matière électriquement isolante.

3. Ensemble d'hélice d'avion selon la revendication 2, dans lequel l'âme (32, 42) comporte une partie annulaire intérieure (42) ayant une densité supérieure à la densité d'une partie périphérique (32) de l'âme, et les broches de bornes (54) s'étendent à travers la partie annulaire intérieure de l'âme.

4. Ensemble d'hélice d'avion selon la revendication 2 ou la revendication 3, dans lequel chaque broche (54) de borne comporte un tronçon extrême fileté (56) destiné à recevoir un organe de fixation d'un fil conducteur provenant de l'un des éléments de dégivrage (58).

5. Ensemble d'hélice d'avion selon l'une quelconque des revendications 2 à 4, dans lequel une seconde couche (51) de matière fibreuse imprégnée de résine est liée à la seconde membrane (34) dans la zone des broches de bornes (54).

6. Ensemble d'hélice d'avion selon l'une quelconque des revendications précédentes, dans lequel l'élément de dôme (26, 27) comprend une partie de dôme arrière annulaire (27) et une partie de dôme avant séparée, globalement conique (26), formées chacune d'une résine formée de fibres, les parties de dôme avant et arrière coopérant pour définir les ouvertures pour les pales d'hélice (18), des moyens (28) sont prévus pour relier de façon amovible la partie de dôme avant à la partie de dôme arrière, et un carénage de cône (60) est monté sur la partie de dôme avant à proximité immédiate de chacune des pales d'hélice, chacun des carénages de cône comprenant une membrane (64) en résine armée de fibres liée à la surface extérieure de la partie de dôme avant, et les carénages de dôme pouvant être démontés, avec la partie de dôme avant, de la partie de dôme arrière.

7. Ensemble d'hélice d'avion selon la revendication 6, dans lequel la membrane (64) de chaque carénage (60) de cône forme sensiblement une surface concave de révolution correspondant globalement à la surface de base de la pale d'hélice correspondante (18).

8. Ensemble d'hélice d'avion selon la revendication 6 ou la revendication 7, dans lequel la membrane (64) de chaque carénage de cône (60) est liée à un noyau (62) en mousse de matière plastique rigide façonné à une forme complémentaire de la surface extérieure arrondie de la section de dôme avant (26).

9. Ensemble d'hélice d'avion selon l'une quelconque des revendications précédentes, dans lequel l'âme (32, 42) comprend une matière en nid d'abeilles.

FIG-1

FIG-2

FIG-3

FIG-4

FIG-5

FIG-6